# EUROPEAN PATENT APPLICATION

(11) **EP 3 073 600 A1**
(43) Date of publication of application: **28.09.2016**
(21) Application number: 16159395.9
(22) Date of filing: 09.03.2016
(51) Int. Cl.: H02J 3/38, H02M 7/493

(54) **POWER SUPPLY SYSTEM AND POWER CONVERSION APPARATUS WITH A PLURALITY OF POWER SOURCES CONNECTED IN PARALLEL**

(30) Priority: 27.03.2015 JP 2015067442
(71) Applicant: Panasonic Intellectual Property Management Co., Ltd., Osaka-shi, Osaka 540-6207 (JP)
(72) Inventor: Ishimoto, Kazuo, Osaka-shi, Osaka 540-6207 (JP)
(74) Representative: Appelt, Christian W.

(57) **Abstract**

A plurality of power conversion apparatuses (10a to 10c) individually outputs AC power based on power input from a plurality of power sources (20a to 20c). A plurality of switches (S1a to S1c/S2a to S2c) to output power to an independent output path (3) is inserted into each of AC output paths (L1a to L1c) of the plurality of power conversion apparatuses (10a to 10c). A plurality of drive signal lines (L2a to L2c/L3a to L3c) to transmit a drive signal from the plurality of power conversion apparatuses (10a to 10c) to the plurality of switches (S1a to S1c/S2a to S2c) is provided. The plurality of drive signal lines (L2a to L2c/L3a to L3c) has a coupling point. At a time of switching of the switch (S1/S2) in order to release interconnection with the grid (2) and to switch to an independent output, the power conversion apparatus (10) determines itself to be a master device when a level of the drive signal line (L2/L3) is inverted after switching of the switch and determines itself to be a slave device when the level is not inverted.

## Description

The present invention relates to a power supply system and a power conversion apparatus with a plurality of power sources connected in parallel.

In recent years, a photovoltaic generation system has been expanding. In a case where the photovoltaic generation system is used in connection with grid, there is a need to provide a power conditioner for converting DC power that is output from a solar cell, into AC power. In recent years, a distributed system is expanding. In the distributed system, a plurality of solar cell modules and a plurality of power conditioners are connected in parallel. In the distributed system, in a case where a failure occurs in one of the power conditioners, power generation can be continued in solar cell modules and power conditioners in the other systems.

When the photovoltaic generation system is operating in interconnection with the grid, a power conditioner monitors a waveform of a grid voltage and outputs AC power in synchronization with a frequency and phase of the grid voltage. In contrast, when a power failure occurs in a grid power source, the photovoltaic generation system is separated from the grid and starts independent operation. In this case, the power conditioner output AC power based on a predetermined frequency and phase.

In a distributed system in which a plurality of power conditioners is connected in parallel, frequencies and phases of the AC power output from the plurality of power conditioners need be in synchronization with each other during independent operation. A possible technique to achieve this would be such that a waveform of AC power output from one power conditioner (master device) is monitored by the other power conditioner (slave device) and then, the other power conditioner (slave device) output AC power in synchronization with the frequency and phase of the master device.

The disclosure has been made in view of this circumstance, and an object of the disclosure is to provide a technique to determine a master device during independent operation in a power supply system in which a plurality of power conversion apparatuses is connected in parallel.

A power supply system according to an aspect of the present invention includes a plurality of power sources, a plurality of power conversion apparatuses that individually outputs AC power based on power input from the plurality of power sources, a plurality of switches that is inserted into each of AC output paths of the plurality of power conversion apparatuses and that outputs power that is output from the plurality of power conversion apparatuses, to an independent output path that is independent of a grid, and a plurality of drive signal lines that transmits a drive signal from the plurality of power conversion apparatuses to the plurality of switches. The plurality of drive signal lines has a coupling point. At a time of switching of the switch in order to release interconnection with the grid and to switch to an independent output, the power conversion apparatus determines itself to be a master device when a level of the drive signal line is inverted after switching of the switch and determines itself to be a slave device when the level is not inverted.

Another aspect of the present invention is a power conversion apparatus. This apparatus is a power conversion apparatus configured to output AC power based on the power input from a power source, the power conversion apparatus being connected in parallel with another power conversion apparatus connected with another power source, wherein a plurality of switches to output power that is output from a plurality of power conversion apparatuses connected in parallel, to an independent output path that is independent of a grid is inserted into each of AC output paths of the plurality of power conversion apparatuses, a plurality of drive signal lines are provided to transmit a drive signal from the plurality of power conversion apparatuses to the plurality of switches, and the plurality of drive signal lines includes a coupling point. At a time of switching of the switch in order to release interconnection with the grid and to switch to an independent output, the power conversion apparatus determines itself to be a master device when a level of the drive signal line is inverted after switching of the switch and determines itself to be a slave device when the level is not inverted.
FIG. 1 is a diagram illustrating a configuration of a photovoltaic generation system according to an embodiment of the present invention;
FIG. 2 is a flowchart illustrating a procedure to determine a master device according to a first embodiment;
FIG. 3 is a flowchart illustrating a procedure to determine a master device according to a second embodiment;
FIG. 4 is a flowchart illustrating a procedure to determine a master device according to a modification example of the second embodiment; and
FIG. 5 is a diagram illustrating a configuration of a photovoltaic generation system using a form C contact switch.

The invention will now be described by reference to the preferred embodiments. This does not intend to limit the scope of the present invention, but to exemplify the invention.

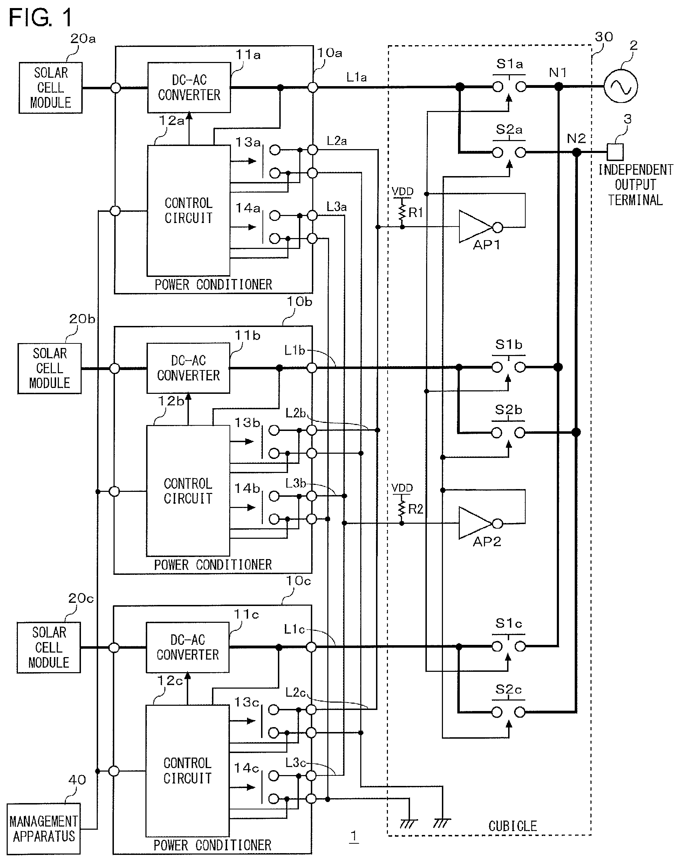

FIG. 1 is a diagram illustrating a configuration of a photovoltaic generation system 1 according to an embodiment of the present invention. The photovoltaic generation system 1 includes a plurality of solar cell modules 20 and a plurality of power conditioners 10, connected in parallel. The plurality of power conditioners 10 individually converts DC power that is output from the plurality of solar cell module 20 into AC power. Hereinafter, an example of triple parallel connection will be described in the present embodiment. However, the number of parallel connection can be arbitrarily determined.

The photovoltaic generation system 1 according to the present embodiment is interconnected with a grid power source 2. A plurality of grid switches S1a to S1c is inserted between a first node N1 connected with the grid power source 2 and each of AC output paths L1a to L1c of the plurality of power conditioners 10a to 10c. When the plurality of grid switches S1a to S1c is turned on, the photovoltaic generation system 1 and the grid power source 2 are interconnected. When the plurality of grid switches S1a to S1c is turned off, the photovoltaic generation system 1 and the grid power source 2 are disconnected. In FIG. 1, a form B contact relay is used as each of the grid switches S1a to S1c. Although it is not illustrated, a transformer is connected between the first node N1 and the grid power source 2, and a general load is connected at a subsequent stage.

The photovoltaic generation system 1 according to the present embodiment includes an independent operation mode. The independent operation mode is a mode that when a power failure occurs in the grid power source 2, the photovoltaic generation system 1 outputs AC power on its own, independently of the grid power source 2. A second node N2 is connected to an independent output terminal 3 used to output AC power independent of the grid power source 2. Between the second node N2 and each of the AC output paths L1a to L1c of the plurality of power conditioners 10a to 10c, a plurality of independent output switches S2a to S2c are inserted. The plurality of independent output switches S2 is connected with the plurality of grid switches S1a to S1c in parallel. When the plurality of independent output switches S2a to S2c is turned on, AC power is output from the independent output terminal 3. When the plurality of independent output switches S2a to S2c is turned off, AC power is not output from the independent output terminal 3. In FIG. 1, an form A contact relay is used as each of the independent output switches S2a to S2c.

Although it is not illustrated, a transformer is connected between the second node N2 and the independent output terminal 3, and a specific load (emergency illumination, or the like) is connected at a subsequent stage. It is also possible to configure to include a path to achieve power supply from the independent output terminal 3 to the general load so as to achieve power supply from the photovoltaic generation system 1 also to the general load when a power failure occurs.

The power conditioner 10 includes a DC-AC converter 11, a control circuit 12, a grid drive switch 13, and an independent drive switch 14. In a grid interconnectionmode in which the power conditioner 10 and the grid power source 2 are interconnected with each other, the control circuit 12 causesACpower in synchronization with a frequency and phase of the AC power supplied from the grid power source 2 to be output from the DC-AC converter 11.

In the independent operation mode, operation differs depending on whether the power conditioner 10 is a master device or a slave device. In a case where the power conditioner 10 is a master device, the control circuit 12 causes AC power with a predetermined frequency to be output from the DC-AC converter 11. Specifically, the control circuit 12 causes AC power in synchronization with a frequency with a waveform supplied from a quartz crystal unit mounted on itself to be output from the DC-AC converter 11. In a case where the power conditioner 10 is a slave device, the controller circuit 12 causes AC power in synchronization with the frequency and phase of the AC power supplied from the master device to be output from the DC-AC converter 11.

A first control circuit 12a of a first power conditioner 10a, a second control circuit 12b of a second power conditioner 10b, and a third control circuit 12c of a third power conditioner 10c are connected with a management apparatus 40 via a communication line. Each of the control circuits 12 outputs measurement data such as voltage and the amount of generated power of each of the solar cell modules 20 to the management apparatus 40 via a communication line. The management apparatus 40 includes a PC and a programmable logic controller (PLC) and is capable of uploading collected measurement data onto a server on the Internet. The server is capable of integrally managing measurement data of the plurality of photovoltaic generation system 1.

In order to execute serial communication as described above, an address is preliminarily allocated to each of the first power conditioner 10a, the second power conditioner 10b, and the third power conditioner 10c. Hereinafter, in present embodiment, an address "01" is allocated to the first power conditioner 10a, an address "02" is allocated to the second power conditioner 10b, and an address "03" is allocated to the third power conditioner 10c.

A plurality of grid drive signal lines L2a to L2c for transmitting a drive signal from the plurality of power conditioners 10a to 10c to the plurality of grid switches S1a to S1c is provided. On one end of the plurality of grid drive signal lines L2a to L2c, a coupling point is provided. The grid drive signal lines L2a to L2c are merged together and thereafter connected to an input terminal of a first inverter amplifier AP1. A signal line connected to the output terminal of the first inverter amplifier AP1 is branched into signal lines toward each of the plurality of grid switches S1a to S1c. The plurality of grid drive signal lines L2a to L2c is pulled up to a power supply potential VDD via a resistor R1.

The other end of the plurality of grid drive signal lines L2a to L2c is connected to a ground potential via a plurality of grid drive switches 13a to 13c, respectively. The plurality of grid drive switches 13a to 13c includes a relay or a semiconductor switch, for example. The plurality of grid drive switches 13a to 13c is controlled by the plurality of control circuits 12a to 12c, respectively. The plurality of grid drive signal lines L2a to L2c is coupled with each other. Accordingly, even in a case where a failure occurs in any of the plurality of power conditioners 10a to 10c, it is possible to perform interconnecting control with the grid power source 2 when at least one of the power conditioners is operating normally.

When the plurality of grid drive switches 13a to 13c is controlled to be turned on, the potential of the plurality of grid drive signal lines L2a to L2c is pulled down to a ground potential. This causes an input level of the first inverter amplifier AP1 to be at a low level. The first inverter amplifier AP1 supplies high-level voltage to the plurality of grid switches S1a to S1c. The plurality of grid switches S1a to S1c is a form B contact switch. Therefore, when a high-level drive signal is supplied, the switch is turned off.

In contrast when the plurality of grid drive switches 13a to 13c is controlled to be turned off, the potential of each of the plurality of grid drive signal lines L2a to L2c is pulled up to a power supply potential VDD. This causes an input level of the first inverter amplifier AP1 to be at a high level. The first inverter amplifier AP1 supplies a low level high-level voltage to the plurality of grid switches S1a to S1c. The plurality of grid switches S1a to S1c turns on when a low-level drive signal is supplied. Similar drive control can be achieved by using a buffer amplifier instead of the first inverter amplifier AP1, and by using a form A contact switch as the plurality of grid switches S1a to S1c.

A plurality of independent output drive signal lines L3a to L3c is provided to transmit a drive signal from the plurality of power conditioners 10a to 10c to the plurality of independent output switches S2a to S2c. On one end of each of the plurality of independent output drive signal lines L3a to L3c, a coupling point is provided. The independent output drive signal lines L3a to L3c are merged together and thereafter connected to an input terminal of a second inverter amplifier AP2. A signal line connected to an output terminal of the second inverter amplifier AP2 is branched into each of signal lines toward each of the plurality of independent output switches S2a to S2c. The plurality of independent output drive signal lines L3a to L3c is pulled up to a power supply potential VDD via a resistor R2.

The other end of each of the plurality of independent output drive signal lines L3a to L3c is connected to a ground potential via a plurality of independent drive switches 14a to 14c, respectively. The plurality of independent drive switches 14a to 14c also includes a relay or a semiconductor switch, for example. Each of the plurality of independent drive switches 14a to 14c is controlled by each the plurality of control circuits 12a to 12c, respectively.

When the plurality of independent drive switches 14a to 14c are controlled to be turned on, the potential of each of the plurality of independent output drive signal lines L3a to L3c is pulled down to a ground potential. This causes an input level of the second inverter amplifier AP2 to be low level. The second inverter amplifier AP2 supplies a high level voltage to the plurality of independent output switches S2a to S2c. Each of the plurality of independent output switches S2a to S2c is a form A contact switch. Therefore, when a high-level drive signal is supplied, each of the switches is turned on.

In contrast, when the plurality of independent drives witches 14a to 14c is controlled to be turned off, the potential of the plurality of independent output drive signal lines L3a to L3c is pulled up to a power supply potential VDD. This causes an input level of the second inverter amplifier AP2 to be at a high level. The second inverter amplifier AP2 supplies low-level voltage to the plurality of independent output switches S2a to S2c. The plurality of independent output switches S2a to S2c turns off when a low-level drive signal is supplied. Similar drive control can be achieved by using a buffer amplifier instead of the second inverter amplifier AP2, and by using a form B contact switch as the plurality of independent output switches S2a to S2c.

FIG. 1 illustrates an example in which the plurality of grid switches S1a to S1c, the plurality of independent output switches S2a to S2c, the first inverter amplifier AP1, the second inverter amplifier AP2, the power supply potential VDD, and the ground potential are provided within a cubicle 30, although an installation location can be arbitrarily determined. For example, at least one portion of the above components may be provided within the power conditioner 10.

As illustrated in FIG. 1, in a case where AC power is supplied from a plurality of power sources to one path, frequencies and phases of the plurality of AC power need be in synchronization with each other. In a normal grid interconnection mode in which a power failure is not occurring in the grid power source 2, the plurality of power conditioners 10a to 10c causes the frequency and phase of the AC power output by itself to synchronize with the frequency and phase of the grid power source 2, observed from each of the AC output paths L1a to L1c. In other words, all of the power conditioners 10a to 10c perform frequency and phase adjustment.

Meanwhile, in the independent operation mode when a power failure occurs in the grid power source 2, AC power as a reference supplied from the grid power source 2 is not present. Accordingly, there is a need to determine a master device to output AC power as a reference among the plurality of power conditioners 10a to 10c. The master device operates independently, without performing control of adjusting itself to the frequency and phase of the AC power output from the other power conditioners 10. Hereinafter, a method to determine a master device from among the plurality of power conditioners 10a to 10c will be described.

First, a method to determine a master device according to a first embodiment will be described. In the first embodiment, the power conditioner 10 with a smallest address is a first candidate of the master device. In a case where the first-candidate power conditioner 10 is not operating normally, the power conditioner 10 with the second smallest address is a next candidate of the master device. In this manner, the power conditioner 10 with the smallest address among the normally operating power conditioners 10 is determined to be the master device. Alternatively, however, it is possible to determine a candidate of the master device in the order from the device with the greatest address.

The first control circuit 12a, when it detects a power failure in the grid power source 2, controls so as to turn on a first grid drive switch 13a to turn off a first grid switch S1a. Control is performed similarly toward the second control circuit 12b and toward the third control circuit 12c. In the control of turning on the plurality of grid drive switches 13a to 13c, the control circuits 12a to 12c operates independently, not in synchronization with each other.

After the plurality of grid switches S1a to S1c has been turned off, the plurality of control circuits 12a to 12c controls so as to turn on the plurality of independent output switches S2a to S2c sequentially in the order of address with a time interval. In the first embodiment, control is performed such that the first control circuit 12a of the first power conditioner 10a, the second control circuit 12b of the second power conditioner 10b, and the third control circuit 12c of the third power conditioner 10c are turned on sequentially in this order.

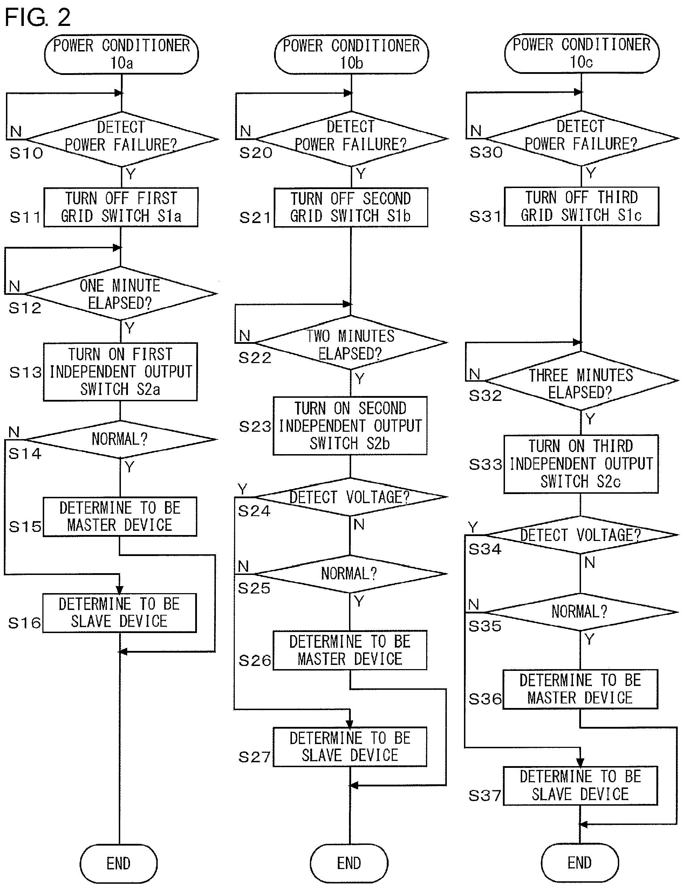

FIG. 2 is a flowchart illustrating a procedure to determine a master device according to the first embodiment. The first power conditioner 10a, when it detects a power failure in the grid power source 2 (S10: Y), controls so as to turn off the first grid switch S1a (S11). After one minute has elapsed (S12: Y), the first power conditioner 10a controls so as to turn on the first independent output switch S2a (S13). The first power conditioner 10a checks a status as to whether the first power conditioner 10a itself is normal, and when the status is normal (S14: Y), the first power conditioner 10a determines itself to be a master device (S15), and when it is not normal (S14: N), the first power conditioner 10a determines itself to be a slave device (S16).

The second power conditioner 10b, when it detects a power failure in the grid power source 2 (S20: Y), controls so as to turn off the second grid switch S1b (S21) . After two minutes have elapsed, (S22: Y), the second power conditioner 10b controls so as to turn on the second independent output switch S2b (S23). The second power conditioner 10b monitors the second AC output path L1b and determines whether a voltage is detected (S24). In a case where a voltage is detected (S24 : Y), the second power conditioner 10b determines itself to be a slave device (S27). In a case where no voltage is detected (S24 : N), the second power conditioner 10b checks a status as to whether the second power conditioner 10b itself is normal (S25). When the status is normal (S2S: Y), the second power conditioner 10b determines itself to be a master device (S26), and when it is not normal (S25: N), the second power conditioner 10b determines itself to be a slave device (S27).

The third power conditioner 10c, when it detects a power failure in the grid power source 2 (S30: Y), controls so as to turn off the third grid switch S1c (S31) . After three minutes have elapsed, (S32: Y), the third power conditioner 10c controls so as to turn on the third independent output switch S2c (S33). The third power conditioner 10c monitors the third AC output path L1c and determines whether a voltage is detected (S34). In a case where a voltage is detected (S34: Y), the third power conditioner 10c determines itself to be a slave device (S37). In a case where no voltage is detected (S34: N), the third power conditioner 10c checks a status as to whether the third power conditioner 10c itself is normal (S35). When the status is normal (S35: Y), the third power conditioner 10c determines itself to be a master device (S36), and when it is not normal (S35: N), the third power conditioner 10c determines itself to be a slave device (S37).

In this manner, the first power conditioner 10a with the first address, when it is operating normally, determines itself to be a master device. The power conditioners 10b and 10c, which have second or later addresses, detects a voltage of each of the AC output paths L1b and L1c generated when the independent output switches S2b and S2c are controlled to be turned on. When a voltage is detected, the power conditioner determines itself to be a slave device. When no voltage is detected and the power conditioner itself is normally operating, the power conditioner determines itself to be a master device.

The plurality of power conditioners 10a to 10c performs turn-on control of the independent output switches S2a to S2c with a time interval. Specifically, when at least one of the power conditioners 10 with smaller address than itself is operating normally, a voltage should already have been supplied to the independent output path by the power conditioner 10 with smaller address at a point where the power conditioner 10 itself performs turn on control of the independent output switch S2. Accordingly, in a case where a voltage is detected when turn-on control is performed on the independent output switch S2, it means that any of the other power conditioners 10 with a smaller address has already been determined to be a master device. In this case, the power conditioner 10 determines itself to be a slave device. In a case where no voltage is detected when turn-on control is performed on the independent output switch S2, it means that none of the power conditioners 10 with smaller addresses outputs voltage. In this case, when there is no problem with the power conditioner 10 itself, the power conditioner 10 determines itself to be a master device.

Processing equivalent to the above-described method of determining a master device can also be implemented by the following processing. The first control circuit 12a, when it detects a power failure in the grid power source 2, controls so as to turn on a first grid drive switch 13a to turn off the first grid switch S1a. Together with this control, the first control circuit 12a stops operation of a first DC-AC converter 11a. Thereafter, the first control circuit 12a controls so as to turn on the first independent drive switch 14a to turn on the first independent output switch S2a. Control is performed similarly toward the second control circuit 12b and toward the third control circuit 12c. The plurality of independent output switches S2a to S2c may be turned on simultaneously or not simultaneously.

After the plurality of independent output switches S2a to S2c has been turned on, the plurality of control circuits 12a to 12c causes the plurality of DC-AC converters 11a to 11c to restart operation in the order of address with a time interval. That is, AC power for independent output is output from the plurality of power conditioners 10a to 10c in the order of address. In a case where each of the second or later power conditioners 10b and 10c output AC power from itself, each of the power conditioners 10b and 10c determines itself to be a slave device when a voltage is detected. When no voltage is detected and there is no problem with itself, each of the power conditioners 10b and 10c determines itself to be a master device. The first power conditioner 10a determines itself to be a master device when there is no problem with itself. By performing the above-described processing, it is also possible to achieve a same effect as achieved by the processing illustrated in the flowchart in FIG. 2. Note that in the processing illustrated in the flowchart in FIG.2, the output of the power conditioner 10 may be temporarily stopped, or need not be temporarily stopped.

Alternatively asanother embodiment,after the master device has been determined by the above-described procedure and output is performed onto an AC path from the master device, the power conditioner to which an address following the master device is determined may perform output when it detects voltage of the AC path, regardless of a time interval at the time of activation, specified in the order of address.

As described above, according to the first embodiment, it is possible to determine a master device during independent operation simply and securely in the photovoltaic generation system 1 in which the plurality of power conditioners 10a to 10c is connected in parallel. In the first embodiment, the plurality of power conditioners 10a to 10c is not required to communicate with each other as to which should be determined to be a master device. It would be possible to determine the power conditioner 10 with the smallest address to be a master device at all time. This procedure, however, would cause operation to be performed in practice without any master device in a case where a failure occurs in the power conditioner 10. In contrast, according to the first embodiment, the power conditioner 10 with the smallest address among the plurality of power conditioners 10a to 10c outputting AC normally is determined to be a master device, it is possible to prevent power conditioners from operating without the presence of master device.

Next, a method to determine a master device according to a second embodiment will be described. In the second embodiment, the first control circuit 12a monitors an end-to-end voltage of the first independent drive switch 14a. Similarly, each of the second control circuit 12b and the third control circuit 12c monitors an end-to-end voltage of each of a second independent drive switch 14b and the third independent drive switch 14c. The first control circuit 12a, when it detects a power failure in the grid power source 2, turns on a first grid drive switch 13a to turn off the first grid switch S1a. Thereafter, the first control circuit 12a controls so as to turn on the first independent drive switch 14a to turn on the first grid switch S1a. The first control circuit 12a detects a potential of the independent output drive signal line L3a at the time of control.

Specifically, the first control circuit 12a detects a potential of the independent output drive signal line L3a immediately before the first independent drive switch 14a is turned on. When the potential of the independent output drive signal line L3a is at a high level, the first control circuit 12a determines the first power conditioner 10a to be a master device. When the potential of the independent output drive signal line L3a is at a low level, the first control circuit 12a determines the first power conditioner 10a to be a slave device. In a case where the power supply potential VDD and the ground potential are connected inversely, when the potential of the independent output drive signal line L3a is at a low level, the first control circuit 12a determines the first power conditioner 10a to be a master device; when the potential of the independent output drive signal line L3a is at a high level, the first control circuit 12a determines the first power conditioner 10a to be a slave device.

Controlling so as to determine a power conditioner to be a master device when the potential of the independent output drive signal line L3 is at a high level and to determine the power conditioner to be a slave device when the potential of the independent output drive signal line L3 is at a low level means controlling so as to determine the power conditioner 10 that has turned on the independent drive switch 14 first to be a master device and to determine the power conditioners 10 that have turned on the independent drive switch 14 the second first or subsequent to be slave devices. Each of the power conditioners 10, when it detects a power failure, controls so as to turn off the grid switch S1, thereafter turn on the independent drive switch 14 to turn on the independent output switch S2. The same control is executed simultaneously in parallel at the plurality of power conditioners 10a to 10c. In an ideal circuit, the plurality of independent drive switches 14a to 14c wouldbe turned on simultaneously. In a real circuit, however, various factors generate a minute time interval. The power conditioner 10 to have turned on the independent drive switch 14 first among the plurality of power conditioners 10a to 10c is determined to be a master device.

In other words, it is possible to regard this such that the power conditioner is determined to be a master device when a level of the independent output drive signal line L3a is inverted after turn-on operation of the first independent drive switch 14a and that the power conditioner is determined to be a slave device when the level is not inverted. Each of the second control circuit 12b of the second power conditioner 10b and the third control circuit 12c of the third power conditioner 10c operates similarly to the first control circuit 12a of the first power conditioner 10a.

The plurality of independent output drive signal lines L3a to L3c is coupled with each other. Accordingly, at a point where the independent drive switch 14 of any of the power conditioners 10 is turned on, potentials of all of the independent output drive signal lines L3a to L3c are pulled down to the ground potential. Therefore, this means that, in a case where the independent output drive signal line L3 at a time of turn-on of the independent drive switch 14 has already been at a low level, the power conditioner itself is not the power conditioner 10 that has turned on the independent drive switch 14 first. In contrast, in a case where the independent output drive signal line L3 at a time of turn-on of the independent drive switch 14 is at a high level, this means that the other power conditioners 10 have not turned on the independent drive switch 14. Accordingly, this means the power conditioner itself is to be the one that turns on the independent drive switch 14 first. In the second embodiment, the power conditioner that has turned on the independent drive switch 14 first is determined to be a master device, and the power conditioners 10 that have turned on the independent drive switch 14 the second or subsequent are determined to be slave devices.

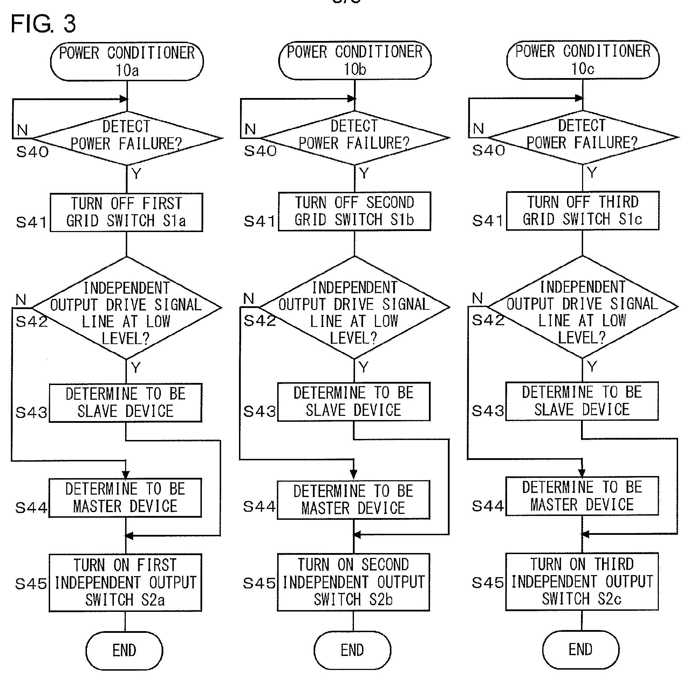

FIG. 3 is a flowchart illustrating a procedure to determine a master device according to the second embodiment. The first power conditioner 10a, when it detects a power failure in the grid power source 2 (S40: Y), controls so as to turn on the first grid drive switch 13a to turn off the first grid switch S1a (S41). Thereafter (after one minute has elapsed, for example), the first power conditioner 10a detects whether the potential of the independent output drive signal line L3a is at a low level (S42). When the potential is at a low level (S42 : Y), the first power conditioner 10a determines itself to be a slave device (S43), and when the potential is at a high level (S42 : N), the first power conditioner 10a determines itself as a master device (S44). The first power conditioner 10a controls so as to turn on the first independent drive switch 14a to turn on the first independent output switch S2a (S45). Each of the second power conditioner 10b and the third power conditioner 10c operates similarly to the first power conditioner 10a.

Next, a method to determine a master device according to a modification example of the second embodiment will be described. In the modification example of the second embodiment, the first control circuit 12a monitors an end-to-end voltage of the first grid drive switch 13a. The first control circuit 12a, when it detects a power failure in the grid power source 2, controls so as to turn on the first grid drive switch 13a to turn off the first grid switch S1a. The first control circuit 12a detects a potential of the grid drive signal line L2a at the time of control.

Specifically, the first control circuit 12a detects a potential of the grid drive signal line L2a immediately before the first grid drive switch 13a is turned on. When the potential of the grid drive signal line L2a is at a high level, the first control circuit 12a determines the first power conditioner 10a to be a master device. When the potential of the grid drive signal line L2a is at a low level, the first control circuit 12a determines the first power conditioner 10a to be a slave device. In a case where the power supply potential VDD and the ground potential are connected inversely, when the potential of the grid drive signal line L2a is at a low level, the first control circuit 12a determines the first power conditioner 10a to be a master device; when the potential of the grid drive signal line L2a is at a high level, the first control circuit 12a determines the first power conditioner 10a to be a slave device.

In other words, it is possible to regard this such that the power conditioner is determined to be a master device when a level of the grid drive signal line L2a is inverted after turn-on operation of the first grid drive switch 13a and that the power conditioner is determined to be a slave device when the level is not inverted. Each of the second control circuit 12b of the second power conditioner 10b and the third control circuit 12c of the third power conditioner 10c operates similarly to the first control circuit 12a of the first power conditioner 10a.

The plurality of grid drive signal lines L2a to L2c are coupled with each other. Accordingly, at a point where the grid drive switch 13 of any of the power conditioners 10 is turned on, potentials of all of the grid drive signal lines L2a to L2c are pulled down to the ground potential. Therefore, this means that, in a case where the grid drive signal line L2 at a time of turn-on of the grid drive switch 13 has already been at a low level, the power conditioner itself is not the power conditioner 10 that has turned on the grid drive switch 13 first. In contrast, in a case where the grid drive signal line L2 at a time of turn-on the grid drive switch 13 is at a high level, this means that the other power conditioners 10 have not turned on the grid drive switch 13. Accordingly, this means the power conditioner itself will be the one that should turn on the grid drive switch 13 earlier than any other. In the modification example, the power conditioner 10 that has turned on the grid switch 13 first is determined to be a master device, and the power conditioners 10 that have turned on the grid drive switch 13 the second or subsequent are determined to be slave devices.

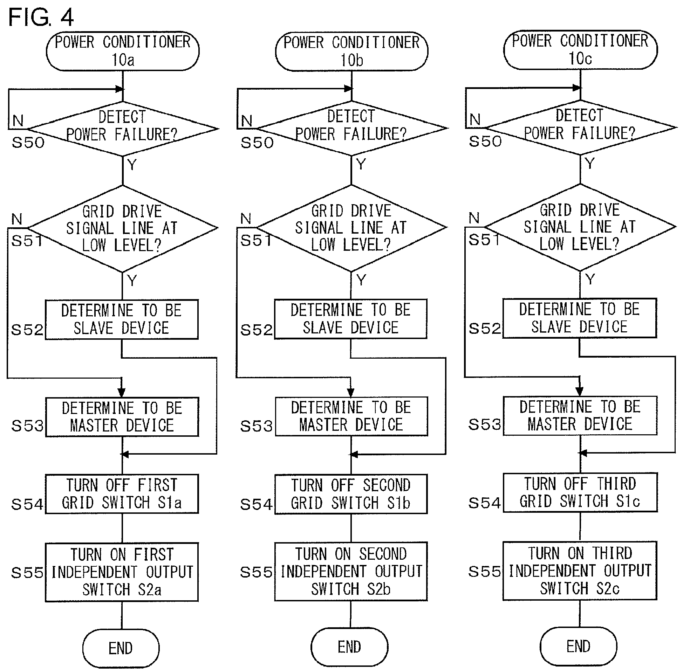

FIG. 4 is a flowchart illustrating a procedure to determine the master device according to the modification example of the second embodiment. The first power conditioner 10a, when it detects a power failure in the grid power source 2 (S50: Y), detects whether the potential of the grid drive signal line L2a is at a low level (S51). When the potential is at a low level (S51: Y), the first power conditioner 10a determines itself to be a slave device (S52), and when the potential is at a high level (S51: N), the first power conditioner 10a determines itself as a master device (S53). Thereafter, the first power conditioner 10a controls so as to turn on the first grid drive switch 13a to turn off the first grid switch S1a (S54) Thereafter, the first power conditioner 10a controls so as to turn on a first independent drive switch 14a to turn on the first independent output switch S2a (S55) . Each of the second power conditioner 10b and the third power conditioner 10c operates similarly to the first power conditioner 10a.

As described above, according to the second embodiment, it is possible to determine a master device during independent operation simply and securely in the photovoltaic generation system 1 in which the plurality of power conditioners 10a to 10c is connected in parallel. In the second embodiment, even when no address has been allocated to a plurality of power conditioners 10a to 10c, it is possible to determine one of the power conditioners 10a to 10c to be a master device.

In comparison of processing in FIG. 3 and processing in FIG. 4, the former enables more exact determination due to its capability of obtaining the time to ensure that the power conditioner itself can operate normally. In the former processing in FIG. 3, it is possible to obtain the time to ensure that the power conditioner itself is normal during the time after the grid switch S1 is turned off until the independent output switch S2 is turned on. Accordingly, in this case, it is possible to prevent more securely a case where a power conditioner 10 with abnormality is determined to be a master device.

The present invention has been described with reference to the present embodiments. The above-described embodiment has been described merely for exemplary purposes. Rather, it can be readily conceived by those skilled in the art that various modification examples may be made by making various combinations of the above-described components or processes, which are also encompassed in the technical scope of the present invention.

The above-described embodiments include an example in which the solar cell module 20 is used as a power source being connected to the power conditioner 10. Alternatively, in this point, other DC generators such as a fuel cell can be used instead of the solar cell module 20. Alternatively, it is possible to connect anAC generator such as a wind-power generator to the power conditioner 10. In this case, an AC-AC converter is used instead of the DC-AC converter 11. Moreover, it is possible to connect a power storage module instead of the solar cell module 20 to the power conditioner 10. In this case, a two-way DC-AC converter is used as the DC-AC converter 11.

Furthermore, FIG.1 includes an example in which the grid switch S1 and the independent output switch S2 are formed with a form B contact switch and a form A contact switch, respectively. Alternatively, however, it is possible to use a form C contact switch that integrates the grid switch S1 and the independent output switch S2.

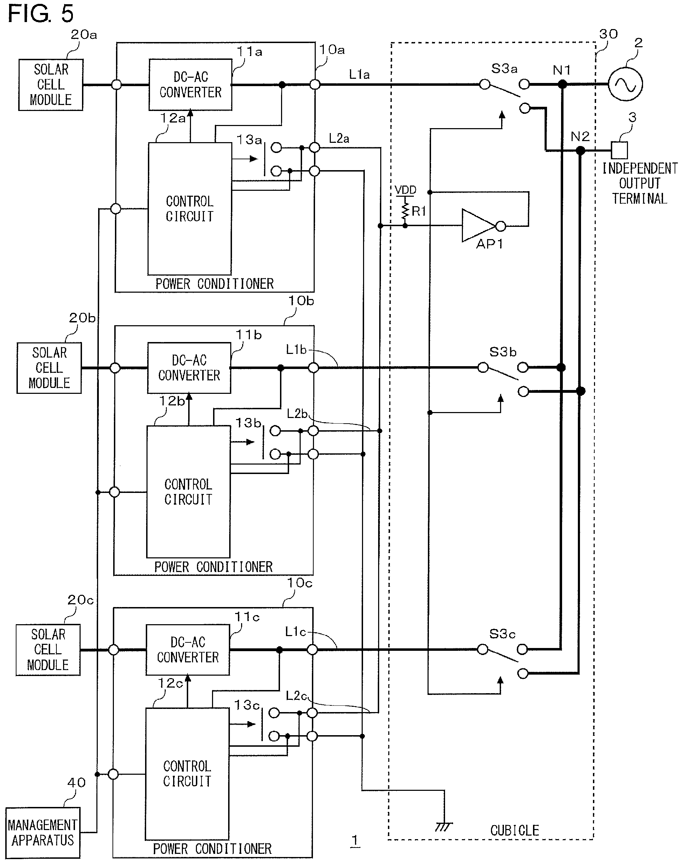

FIG. 5 is a diagram illustrating a configuration of a photovoltaic generation system using a form C contact switch. In FIG. 5, the grid switch S1 and the independent output switch S2 in FIG. 1 are integrated into a form C contact switch S3. In this case, it is possible to integrate the grid drive switch 13 and the independent drive switch 14 in each of the power conditioner 10 Furthermore, it is also possible integrate the grid drive signal line L2 and the independent output drive signal line L3. It is also possible to integrate the first inverter amplifier AP1 and the second inverter amplifier AP2. In this configuration, after detection of a power failure, each of the control circuits 12 stops operation of the DC-AC converter 11 before switching the form C contact switch. Thereafter, each of the control circuits 12 switches the form C contact switch from a grid side to an independent output side and restarts operation of the DC-AC converter 11.

Note that the present embodiments may be defined by the following items.
[Item 1]
   A power supply system (1) comprising:
   a plurality of power sources (20a to 20c);
   a plurality of power conversion apparatuses (10a to 10c) that individually outputs AC power based on power input from the plurality of power sources (20a to 20c);
   a plurality of switches (S1a to S1c/S2a to S2c) that is inserted into each of AC output paths (L1a to L1c) of the plurality of power conversion apparatuses (10a to 10c) and outputs power that is output from the plurality of power conversion apparatuses (10a to 10c) to an independent output path (3) that is independent of a grid (2); and
   a plurality of drive signal lines (L2a to L2c/L3a to L3c) that transmits a drive signal from the plurality of power conversion apparatuses (10a to 10c) to the plurality of switches (S1a to S1c/S2a to S2c),
   wherein the plurality of drive signal lines (L2a to L2c/L3a to L3c) has a coupling point, and at a time of switching of the switch (S1/S2) in order to release interconnection with the grid (2) and to switch to an independent output, the power conversion apparatus (10) determines itself to be a master device when a level of the drive signal line (L2/L3) is inverted after switching of the switch and determines itself to be a slave device when the level is not inverted.
   With this configuration, it is possible to determine a master device during independent operation on the power supply system (1) in which a plurality of power conversion apparatuses (10a to 10c) is connected in parallel.
[Item 2]
   The power supply system (1) according to Item 1, further comprising:
   a plurality of grid switches (S1a to S1c) that is inserted between a first node (N1) to which a grid (2) is connected and each of the AC output paths (L1a to L1c) of the plurality of power conversion apparatuses (10a to 10c), wherein
   the plurality of switches is a plurality of independent output switches (S2a to S2c) that is inserted between a second node (N2) connected to the independent output path (3) and each of the AC output paths (L1a to L1c) of the plurality of power conversion apparatuses (10a to 10c) in parallel with the plurality of grid switches (S1a to S1c).
   By monitoring a level of the drive signal line (L3) used to drive the independent output switch (S2), it is possible to determine whether the power conversion apparatus (1) is determined to be a master or a slave.
[Item 3]
   The power supply system (1) according to Item 1, further comprising:
   a plurality of independent output switches (S2a to S2c) that is inserted between a second node (N2) connected to the independent output path (3) and each of the AC output paths (L1a to L1c) of the plurality of power conversion apparatuses (10a to 10c), wherein
   the plurality of switches is a plurality of grid switches (S1a to S1c) that is inserted between a first node (N1) to which a grid (2) is connected and each of the AC output paths (L1a to L1c) of each of the plurality of power conversion apparatuses (10a to 10c) in parallel with the plurality of independent output switches (S2a to S2c).
   By monitoring a level of the drive signal line (L2) used to drive the grid switch (S1), it is possible to determine whether the power conversion apparatus (1) is determined to be a master or a slave.
[Item 4]
   A power conversion apparatus (10) that outputs AC power based on the power input from a power source (20),
   the power conversion apparatus (10) being connected in parallel with another power conversion apparatus (10) connected with another power source (20), wherein
   a plurality of switches (S1a to S1c/S2a to S2c) that outputs power that is output from a plurality of power conversion apparatuses (10a to 10c) connected in parallel, to an independent output path (3) that is independent of a grid (2), is inserted into each of AC output paths (L1a to L1c) of the plurality of power conversion apparatuses (10a to 10c),
   a plurality of drive signal lines (L2a to L2c/L3a to L3c) is provided to transmit a drive signal from the plurality of power conversion apparatuses (10a to 10c) to the plurality of switches (S1a to S1c/S2a to S2c),
   the plurality of drive signal lines (L2a to L2c/L3a to L3c) includes a coupling point, and
   at a time of switching of the switch (S1/S2) in order to release interconnection with the grid (2) and to switch to an independent output, the power conversion apparatus (10) determines itself to be a master device when a level of the drive signal line (L2/L3) is inverted after switching of the switch and determines itself to be a slave device when the level is not inverted.

With this configuration, it is possible to determine a master device during independent operation on the power supply system (1) in which a plurality of power conversion apparatuses (10a to 10c) is connected in parallel.

## Claims

1. A power supply system (1) comprising:
a plurality of power sources (20a to 20c);
a plurality of power conversion apparatuses (10a to 10c) that individually outputs AC power based on power input from the plurality of power sources (20a to 20c);
a plurality of switches (S1a to S1c/S2a to S2c) that is inserted into each of AC output paths (L1a to L1c) of the plurality of power conversion apparatuses (10a to 10c) and outputs power that is output from the plurality of power conversion apparatuses (10a to 10c) to an independent output path (3) that is independent of a grid (2); and
a plurality of drive signal lines (L2a to L2c/L3a to L3c) that transmits a drive signal from the plurality of power conversion apparatuses (10a to 10c) to the plurality of switches (S1a to S1c/S2a to S2c), wherein
the plurality of drive signal lines (L2a to L2c/L3a to L3c) has a coupling point, and
at a time of switching of the switch (S1/S2) in order to release interconnection with the grid (2) and to switch to an independent output, the power conversion apparatus (10) determines itself to be a master device when a level of the drive signal line (L2/L3) is inverted after switching of the switch and determines itself to be a slave device when the level is not inverted.

2. The power supply system (1) according to claim 1, further comprising:
a plurality of grid switches (S1a to S1c) that is inserted between a first node (N1) to which a grid (2) is connected and each of the AC output paths (L1a to L1c) of the plurality of power conversion apparatuses (10a to 10c), wherein
the plurality of switches is a plurality of independent output switches (S2a to S2c) that is inserted between a second node (N2) connected to the independent output path (3) and each of the AC output paths (L1a to L1c) of the plurality of power conversion apparatuses (10a to 10c) in parallel with the plurality of grid switches (S1a to S1c).

3. The power supply system (1) according to claim 1, further comprising:
a plurality of independent output switches (S2a to S2c) that is inserted between a second node (N2) connected to the independent output path (3) and each of the AC output paths (L1a to L1c) of the plurality of power conversion apparatuses (10a to 10c), wherein
the plurality of switches is a plurality of grid switches (S1a to S1c) that is inserted between a first node (N1) to which a grid (2) is connected and each of the AC output paths (L1a to L1c) of each of the plurality of power conversion apparatuses (10a to 10c) in parallel with the plurality of independent output switches (S2a to S2c).

4. A power conversion apparatus (10) that outputs AC power based on the power input from a power source (20),
the power conversion apparatus (10) being connected in parallel with another power conversion apparatus (10) connected with another power source (20), wherein
a plurality of switches (S1a to S1c/S2a to S2c) that outputs power that is output from a plurality of power conversion apparatuses (10a to 10c) connected in parallel, to an independent output path (3) that is independent of a grid (2), is inserted into each of AC output paths (L1a to L1c) of the plurality of power conversion apparatuses (10a to 10c),
a plurality of drive signal lines (L2a to L2c/L3a to L3c) is provided to transmit a drive signal from the plurality of power conversion apparatuses (10a to 10c) to the plurality of switches (S1a to S1c/S2a to S2c),
the plurality of drive signal lines (L2a to L2c/L3a to L3c) includes a coupling point, and
at a time of switching of the switch (S1/S2) in order to release interconnection with the grid (2) and to switch to an independent output, the power conversion apparatus (10) determines itself to be a master device when a level of the drive signal line (L2/L3) is inverted after switching of the switch and determines itself to be a slave device when the level is not inverted.
